# EUROPEAN PATENT APPLICATION

(11) **EP 2 413 591 A1**
(43) Date of publication of application: **01.02.2012**
(21) Application number: 11155982.9
(22) Date of filing: 25.02.2011
(51) Int. Cl.: H04N 5/445, H04N 5/76, H04N 7/16, G06F 17/30

(54) **Digital broadcast recording/reproducing apparatus**

(30) Priority: 27.07.2010 JP 2010168673
(71) Applicant: Kabushiki Kaisha Toshiba, Tokyo (JP)
(72) Inventor: Yoshida, Osamu, Tokyo (JP)
(74) Representative: HOFFMANN EITLE

(57) **Abstract**

According to embodiments, there is described a digital broadcast recording/reproducing apparatus including: a receiving module configured to receive a digital broadcast; a recording/reproduction module configured to record/reproduce a program received by the receiving module; an information recording/management module configured to record/manage program meta information received by the receiving module, the program meta information corresponding to the program to be recorded by the recording/reproduction module; an information receiving module configured to access an information providing system that provides recommended program information, to receive the recommended program information therefrom; and a recorded-program table generation module configured to display simultaneously a recommendation display based on the recommended program information, in at least one of a case where the program meta information recorded in the information recording/management module is displayed and a case where the program recorded in the recording/reproduction module is reproduced.

## Description

### CROSS-REFERENCE TO RELATED APPLICATION(S)

This application is based upon and claims the benefit of priority from Japanese Patent Application No. 2010-168673, filed on July 27, 2010, the entire contents of which are incorporated herein by reference.

### FIELD

Embodiments described herein relate generally to a digital broadcast recording/reproducing apparatus which displays a recorded-program display.

### BACKGROUND

Recently, a terrestrial digital broadcast and a BS/CS digital broadcast are operated at full scale, and the environment where many programs can be watched at a high image quality and a high sound quality has been established. A digital broadcast is provided with a function of an EPG (Electronic Program Guide). A program table of the current day or one week ahead is displayed simply by pressing a button of a remote controller of a receiver, so as to allow the user to view the program contents such as the broadcast time and the cast, to search for information, and to reserve recording of a program.

As the number of channels increases, the programs that the user prefers to watch also increases, and overlap of broadcast times of the programs may occur. Therefore, frequently, the user records a program to watch it at convenient time.

Because of such background, a video recorder which incorporates a large-capacity recording medium and is capable of automatically recording programs according to the user's preference widely used. In such video recorder, usually, program information of recorded programs is displayed as a list so that the user can easily select a program to be reproduced.

Also, there is proposed a television receiver including: a program recording portion which records a record-reserved broadcast program; a recorded-program information recording portion which records the broadcast channel and broadcast time of the program recorded by the program recording portion, as recorded-program information; and a display controller which displays a recorded-program table in a list so that the broadcast channel and the broadcast time are respectively set as the abscissa and the ordinate, based on the program information.

On the other hand, recently, there is used a system in which operation history information related to a record reserving operation performed by the user is transmitted to a database on a network, and the operation history information is counted on the database to obtain statistical information of the user's preference. When recommended program information produced by the database is received by a television receiver etc., a mark indicating a recommended program is displayed on an EPG program table.

Such recommended program information is updated by the database, and the database provides the latest recommended program information based on the current reservation status, to the user. When a television receiver receives, for example, once a day the latest recommended program information, a mark based on the latest recommended program information can be displayed on the program table.

However, the recommended program information supplied from the database merely relates to the user's preference for future broadcast program based on a result of counting reservation operations that have been performed up to the current times, and is not information for past recorded programs. Therefore, a mark based on recommended program information cannot be displayed on the recorded-program table.

### SUMMARY

One object of the invention is to provide a digital broadcast recording/reproducing apparatus which can display a recommendation display based on recommended program information, on a recorded-program table display.

According to embodiments, there is described a digital broadcast recording/reproducing apparatus including: a receiving module configured to receive a digital broadcast; a recording/reproduction module configured to record/reproduce a program received by the receiving module; an information recording/management module configured to record/manage program meta information received by the receiving module, the program meta information corresponding to the program to be recorded by the recording/reproduction module; an information receiving module configured to access an information providing system that provides recommended program information, to receive the recommended program information therefrom; and a recorded-program table generation module configured to display simultaneously a recommendation display based on the recommended program information, in at least one of a case where the program meta information recorded in the information recording/management module is displayed and a case where the program recorded in the recording/reproduction module is reproduced.

When a program is recorded by the recording/reproduction module, the information recording/management module may record recommended program information corresponding to the program to be recorded.

At least one of at a predetermined time and upon receiving an operation of displaying recommended program information, the information receiving module may receive the recommended program information produced by the information providing system.

The apparatus may further includes: an information transmitting module configured to access the information providing system, and to transmit at least one operation of record reservation, execution of recording, and reproduction of a recorded program in the recording/reproduction module, as operation history information to the information providing system.

The recorded-program table generation module may display a recorded-program display in a program table format.

The recorded-program table generation module may display a recorded-program display in a list format.

The recorded-program table generation module may simultaneously display a recorded-program display and a program table which displays programs after the current time.

### BRIEF DESCRIPTION OF THE DRAWINGS

A general architecture that implements the various feature of the present invention will now be described with reference to the drawings. The drawings and the associated descriptions are provided to illustrate embodiments of the present invention and not to limit the scope of the present invention.

Fig. 1 illustrates a system configuration of a television receiver into which a digital broadcast recording/reproducing apparatus of a first embodiment is incorporated.

Fig. 2 illustrates an EPG-based program table to be displayed on a displaying device 8.

Fig. 3 illustrates a recorded-program table including a recommendation display.

Fig. 4 is a flowchart illustrating the operation of the first embodiment.

Fig. 5 is a flowchart illustrating the operation of a second embodiment.

Fig. 6 is a flowchart illustrating the operation of a third embodiment.

Fig. 7 illustrates a recorded-program table employed in a fourth embodiment.

Fig. 8 illustrates a recorded-program table display employed in a fifth embodiment.

Fig. 9 illustrates a recorded-program table display employed in a sixth embodiment.

### DETAILED DESCRIPTION

In general, according to one embodiment, there is described a digital broadcast recording/reproducing apparatus including: a receiving module configured to receive a digital broadcast; a recording/reproduction module configured to record/reproduce a program received by the receiving module; an information recording/management module configured to record/manage program meta information received by the receiving module, the program meta information corresponding to the program to be recorded by the recording/reproduction module; an information receiving module configured to access an information providing system that provides recommended program information, to receive the recommended program information therefrom; and a recorded-program table generation module configured to display simultaneously a recommendation display based on the recommended program information, in at least one of a case where the program meta information recorded in the information recording/management module is displayed and a case where the program recorded in the recording/reproduction module is reproduced.

Hereinafter, embodiments will be described in detail with reference to the drawings.

(First embodiment)

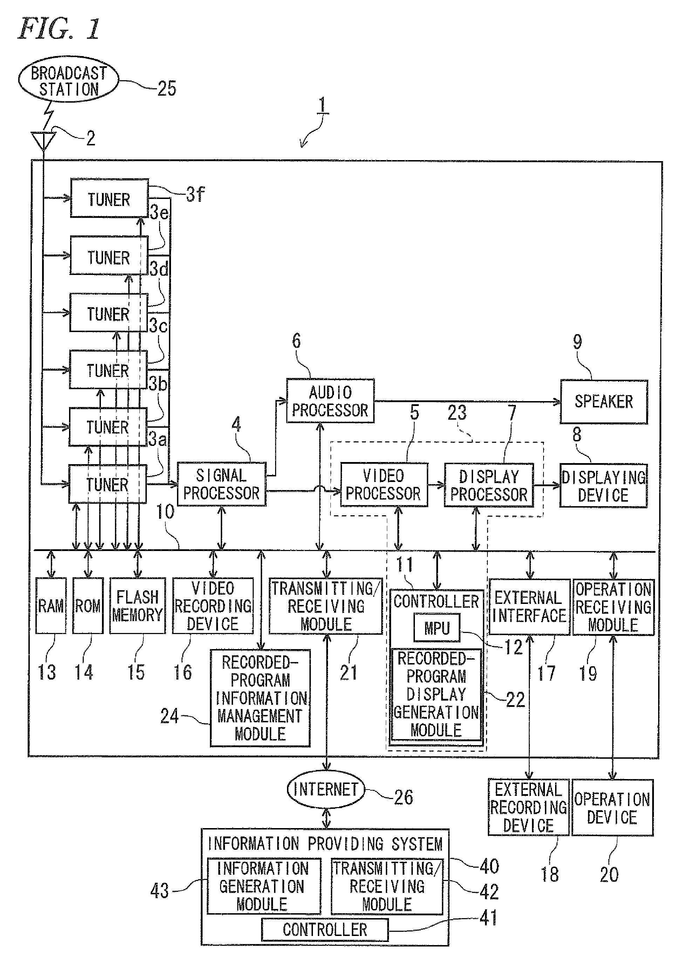

Fig. 1 illustrates a system configuration of a television receiver into which a digital broadcast recording/reproducing apparatus of a first embodiment is incorporated.

An antenna 2 receives a broadcast radio wave transmitted from a broadcast station 25, and is used for terrestrial/satellite digital broadcasts. Tuners 3a to 3f (hereinafter, representatively referred to as the tuner 3) are controlled by a controller 11 to select a broadcast signal of a desired channel from broadcast signals of the terrestrial digital broadcast and the satellite digital broadcast, and demodulate the selected signal in accordance with the modulation system of the corresponding digital broadcast. The signal is demodulated to digital video and audio signals by the OFDM (Orthogonal Frequency Division Multiplexing) demodulation in the case of a terrestrial digital broadcast signal, or by the PSK (Phase Shift Keying) demodulation in the case of a satellite digital broadcast signal, and the demodulated signal in the transport stream (TS) format is supplied to a signal processor 4.

The signal processor 4 has a decoding function such as a DEMUX processor for an input TS, an MPEG (Moving Picture Experts Group) decoder, and a video/audio decoder, applies a predetermined digital signal process on the digital video and audio signals supplied from the tuner 3, and then supplies the signals to a video processor 5 and an audio processor 6.

The signal processor 4 may have an encoding function of encoding an external input signal to the MPEG format.

The video processor 5 manages digital video data supplied from the signal processor 4, and a window drawing based on a data broadcast transferred through a bus 10 and the GUI (Graphical User Interface), to superimpose images based on the data broadcast and the GUI on an image based on the video data, and sends the superimposed image to a display processor 7.

For example, various data for obtaining a program, EPG information, program attribute information (the genre of the program, and the like), caption information (service information, SI, and PSI), and the like are given to the video processor 5. Based on the input information, the video processor 5 can perform an image producing process of displaying an EPG and a caption.

Also image information (an OSD signal) for performing a superimpose display is supplied to the video processor 5. The video processor 5 synthesizes the image based on the video data with an image based on the OSD signal, that based on the data broadcast, the EPG, the caption, and the like, and supplies the resulting synthesized image to the display processor 7.

The display processor 7 converts the digital video signal supplied from the video processor 5 to the format (the pixel number, the frame frequency, and the scanning method) to be compatible with a displaying device 8, arbitrarily adjusts the display color, and then supplies the resulting signal to the displaying device 8. Therefore, a video image can be displayed on the displaying device 8.

The audio processor 6 converts the digital audio data supplied from the signal processor 4, to an analog audio signal which can be reproduced by a speaker 9, and then supplies the analog audio signal to the speaker 9 to reproduce the sound.

In the digital broadcast receiver 1, the whole operations including the above-described receiving operation are generally controlled by the controller 11. The controller 11 has an MPU (Micro Processing Unit) 12, and controls the components which are connected to the MPU through a bus 10.

A RAM (Random Access Memory) 13 is a read/write memory which stores various data required in the data processing of the controller 11, and functions as a buffer memory which stores video data and the like. A ROM (Read Only Memory) 14 is a read only memory which stores control programs to be executed by the controller 11, and the like.

A flash memory 15 is a rewritable nonvolatile semiconductor memory in which data are not erased even when power is switched off. The flash memory 15 stores data such as various video and audio settings, recording and viewing reservations, and the like which are performed by the user. Data such as a designated channel and a designated time period in the recording are once stored in the RAM 13, and then stored in the flash memory 15.

The digital broadcast receiver 1 includes a video recording device 16, such as an HDD (Hard Disk Drive), an SSD (Solid State Drive) and the like. The video recording device 16 is not only connected to the data bus 10 but also provided with an interface for recording and reproducing information, to thereby record or reproduce a broadcast program or the like in or from the HDD or the SSD through the interface. The video recording device 16 can simultaneously record programs of plural record-designated channels for a record-designated time period.

The digital broadcast receiver further includes a recorded-program information management module 24 which obtains information of an EIT which will be described later, as information for managing a recorded program, from the signal processor 4 and which records metadata related to a recorded program, as recorded-program management information. The metadata includes detailed information such as the title of the program, the start time, the end time, and contents of the program; designated conditions of the recording; and input items such as information (inhibition of automatic erasure and the like) designated by user.

An external interface 17 is an interface such as USB (Universal Serial Bus), IEEE 1394 (Institute of Electrical and Electronic Engineers 1394), eSATA (external Serial ATA (AT Attachment)), or the like, and an external recording device 18 including a driver, such as a USB memory, a USB external device, an HDD, an SSD, a CD-R/RW, or a DVD writer is connected to the external interface. A program can be recorded into the external storage device 18 through the external interface 17. The user can select which of the video recording device 16 or the external storage device 18 is used for recording a program.

In a digital broadcast, usually, the copy control is set, so that a program which can be recorded only once cannot be copied but can be moved. The term "move" means changing (moving) of a storing location of a program having been recorded in an HDD or an SSD. After moving, the program in the old location is automatically erased. A program that is called dubbing 10 in which a program recorded in an HDD or an SSD can be copied nine times and the tenth copy is performed as moving can be copied to another HDD or SSD (including another partition of the same HDD or SSD), or an optical disk such as a DVD.

An operation device 20 is configured by, for example, a remote controller using wireless communication based on an infrared ray, Bluetooth (registered trademark), or the like, a wired or wireless keyboard or mouse, or the like, and generates and sends an operation signal based on the user's operation. The operation receiving module 19 receives the operation signal transmitted from the operation device 20, and transfers the signal to the controller 11.

The digital broadcast receiver 1 is connected to the Internet 26 through a transmitting/receiving module 21, and can perform information transmission with a server etc. on the Internet 26 through the transmitting/receiving module 21.

While viewing a program table which is displayed on the screen 8a based on EPG data, the user can operate the operation device 20 to select a program, and record the program or reserve recording of the program. The EPG is provided in order to facilitate the user's selection of a program in the situation where the number of channels is growing. The EPG is displayed on the screen 8a of the displaying device 8, in a similar manner as the display manner of a television program table in a newspaper or the like. While viewing the program table on the screen 8a, the user uses the program table for selecting a program, displaying detailed information, and reserving recording, through the remote controller.

The manner of displaying a program table based on EPG data is different depending on the manufacturer and kind of a broadcast receiver. In the digital broadcast receiver 1, similarly with the above-mentioned television program table in a newspaper or the like, the program table is displayed so that the channel axis is set in the lateral direction, the time axis is set in the vertical direction, and programs which are to be broadcasted after the current time are arranged. When a program is selected, the title, and broadcast date and time of the program are displayed, and also detailed information such as the genre, cast, and contents of the program are additionally displayed.

Similarly with the video image and the sound, the EPG data are packetized, and transmitted while multiplexed. Data of program information are contained in the EIT (Event Information Table) of the SI (Service Information, program arrangement information). The controller 11 analyzes the information supplied from the signal processor 4, and produces a program table. The produced program table is displayed on the screen 8a of the displaying device 8 by a display controller 23 which is configured by the video processor 5, the display processor 7, and the controller 11.

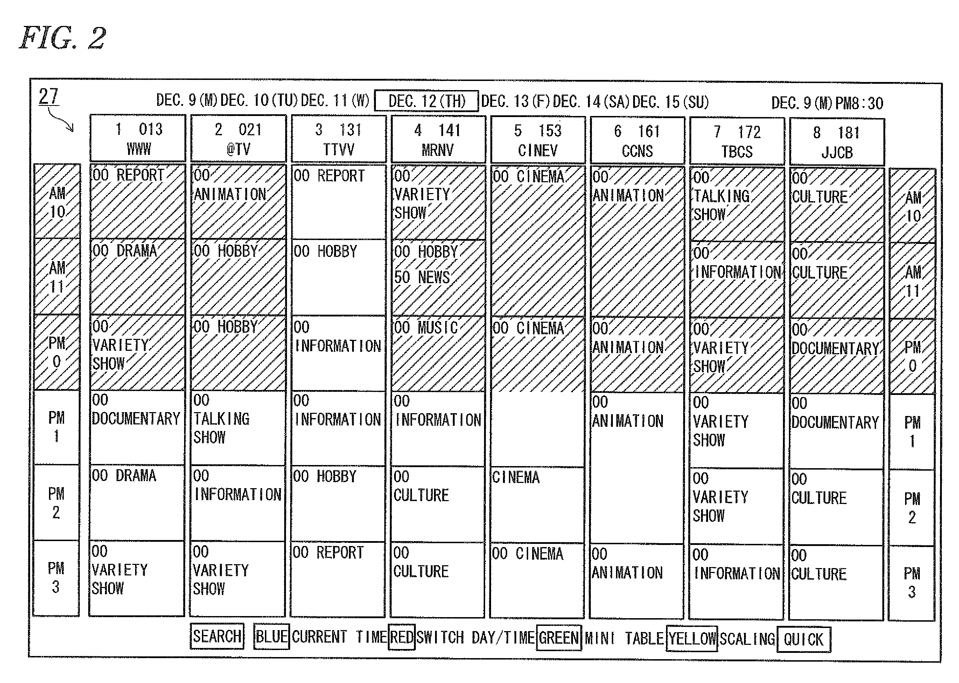

Fig. 2 illustrates an EPG-based program table to be displayed on the displaying device 8. In the program table 27, a record designation can be performed for plural channels with a time zone. Fig. 2 shows that the current time is PM 8:30 of Dec. 9 (M), and also a program table in a time zone of six hours from 10 AM of Dec. 12 (Th) to 3 PM. The hatched portions in Fig. 2 indicate that the background color is different from that of the other portion. The figure shows that, in the time zone indicated by the hatched portions or three hours from 10 AM to 1 PM, simultaneous and continuous recordings of programs of channels 1, 2, 4, 5, 6, 7, and 8 are designated. With respect to the record-designated time zone and channels, the background color is changed, so that the user can easily check the time zone and the channels in which the user designates recording. Similarly, reservation of other programs may be designated while changing the date and time, the time zone, and the channels.

In the embodiment, the controller 11 can control recording and reproduction performed by the video recording device 16 and the external storage device 18, and reserve recording on the devices 16, 18. When the record channel, the record time, the recording destination, and the like are designated by a user's operation on the operation device 20, the controller 11 produces record reservation information based on the designation, and records the information in the flash memory 15, or the like. Time information is supplied from a timer (not shown) to the controller 11. At the record start time described in the record reservation information, the controller 11 supplies a compressed video signal of the record channel to a device which is designated as the recording destination to be recorded therein.

In the embodiment, the digital broadcast receiver 1 has the many tuners 3, and can simultaneously record one or plural record-designated channels for record-designated time zones (hereinafter, such recording is referred to as simultaneous and continuous recording on plural programs).

For example, the record time can be set in the following manner. The time is partitioned into from 10:00 to 12:00 every day to from 19:00 to 22:00. Alternatively, 24-hour continuous recording may be set. The time information is stored in, for example, the recorded-program information management module 24.

The recorded-program information management module 24 may be configured in the video recording device 16 or in the external storage device 18.

The controller 11 has a recorded-program display generation module 22 for displaying a recorded-program display. Usually, a recorded-program display for programs having been recorded may be displayed in a list format. On the other hand, when programs have been subjected to simultaneous and continuous recording, a display in a program table format is effective. The recorded-program display generation module 22 can produce and display a recorded-program table in such program table format. The recorded-program display generation module 22 produces a recorded-program table in plural record-designated channels and a record-designated time zone.

In the embodiment, the controller 11 can supply operation history information such as record reservation, execution of record reservation, and reproduction of a recorded program, together with information such as user's regional information, and the ID of the recording device to an information providing system 40 through the transmitting/receiving module 21 and the Internet 26.

For example, the controller 11 transmits, as the operation history information, information of the channel, the start time, and the end time, and information of the operation kind indicative of one of reservation, execution of recording, and reproduction. In this case, the controller 11 receives information of process status data and the existence or nonexistence of data updation, from the information providing system 40. The controller 11 may output the operation history information of reproduction, only when reproduction is continued for a given time (for example, five minutes). Also when a recorded program is moved to another recording device, for example, the operation history information based on the move operation may be transmitted.

The information providing system 40 is configured by a controller 41, a transmitting/receiving module 42, and an information generation module 43. The transmitting/receiving module 42 is controlled by the controller 41 to receive the operation history information through the Internet 26. The information generation module 43 counts the received operation history information, and produces recommended program information about a recommended program, based on a result of the counting.

The recommended program information produced by the information generation module 43 contains, for example, ranking data based on the number of program reservations, self-recommendation data based on the reservation history of each user, and data of other-person recommendation in which a program that is reserved by another user having a similar preference as the present user is recommended. The information generation module 43 can further produce viewing ranking data by using information of reproduction operations. The recommended program information contains also information of viewing ranking.

For example, the information generation module 43 applies a normalizing process on a program name. In the recording/reproducing apparatus, for example, programs of up to eight days ahead can be reserved. With respect to programs of a variety show, a drama, or the like which are broadcasted in the same time zone of weekdays, and those such as a serial drama which is broadcasted once a week, they are the same program although the broadcast date and time are different. The information generation module 43 may perform grouping with the program name which has undergone the normalizing process, so as to correctly estimate the popularity of the program, and count the number of reservations in the unit program irrespective of the broadcast date and time.

While reducing the number of reservations with respect to a program which has been, for example, ended or duplicated, the information generation module 43 counts the operation history information which is received through the Internet 26, thereby occasionally producing latest recommended program information. Namely, the recommended program information shows the ranking of popular programs based on the number of user's reservations, with respect to programs which will be broadcasted after the current time.

In the embodiment, the information generation module 43 can further output past recommended program information which is a result of counting of past operation history information. The information generation module 43 counts operation history information, for example, once per day, and produces recommended program information which is a result of ranking. In response to a transmission request from the user, the controller 41 transmits recommended program information of programs which have not been broadcasted at the timing of the transmission. Namely, information of ranking in which programs which have been broadcasted are removed from the ranking result obtained by counting of operation history information is transmitted as the recommended program information. As time advances, therefore, the recommended program information transmitted from the information providing system 40 is changed.

In the embodiment, the past recommended program information which is not updated after a predetermined time may be employed. As the past recommended program information, for example, previous-day recommended program information may be used.

The information generation module 43 produces not only past recommended program information based on the number of record reservations, but also past recommended program information based on the number of executions of reserved recording, that of reproductions of reserve-recorded programs, etc.

The device which transmits operation history information to the information providing system 40 informs of device setting information, for example, once a day. For example, the controller 11 transmits information of the ON/OFF of the service, receivable channels, and the area, as the device unique setting information to the information providing system 40. At the transmission of the device setting information, then, the controller 11 receives information of the date and time of the next communication and the existence or nonexistence of data updation.

The controller 11 can receive the recommended program information at an appropriate time. At the reception of the recommended program information, the controller 11 transmits genre device unique setting information as transmission data. As recommended program information, furthermore, the controller 11 receives information of, for example, the channel start time, the end time, the score of the ranking, and the existence or nonexistence of data updation, for each program.

The controller 11 receives the recommended program information from the information providing system 40 through the Internet 26 and the transmitting/receiving module 21, whereby a display or the like based on the recommended program information is allowed to be additionally displayed on the program table display.

In the embodiment, at the reserve recording, the controller 11 further receives the recommended program information or the past recommended program information from the information providing system 40 before the start of the reserve recording, extracts information of the recorded program from the received recommended program information or past recommended program information, and records the extracted information in correspondence with the recorded program, as recorded-program management information. The controller 11 may record information itself extracted from the received recommended program information or past recommended program information, or may record ranking information based on the received recommended program information or past recommended program information, information indicative of the level to which the ranking belongs, and the like.

In the embodiment, when displaying the recorded-program table for programs having been recorded, in the format of a program table, the controller 11 can display a recommendation display based on the recommended program information or the past recommended program information.

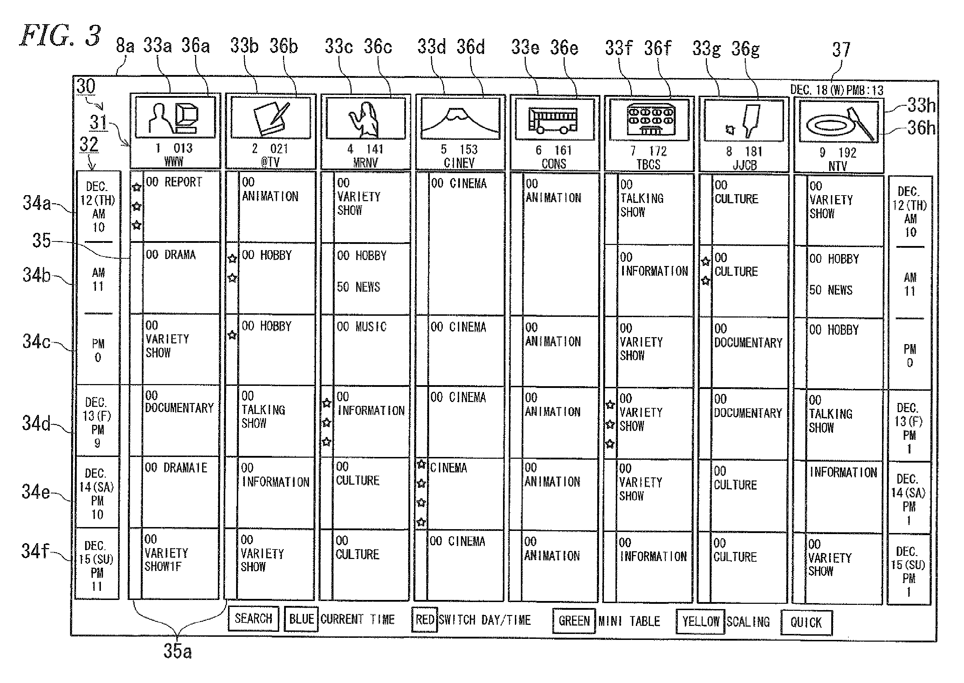

Fig. 3 illustrates a recorded-program table including such a recommendation display. A recorded-program table 30 is displayed on a substantially full area of the screen 8a of the displaying device 8, or a part of the recorded-program table is displayed while designating a range in the screen 8a. Fig. 3 shows the case where the recorded-program table is displayed on a substantially full area of the screen 8a. The recorded-program table 30 is produced by the recorded-program display generation module 22, and displayed on the screen 8a by the display controller 23.

For example, the recorded-program table 30 is displayed similarly with the EPG-based program table, such that a channel axis 31 is set in the lateral direction of the screen 8a, and a time axis 32 is set in the vertical direction. A usual EPG-based program table shows the whole of receivable channels, and present and future continuous times after the current time. By contrast, the recorded-program table 30 shows recorded programs in plural record-designated channels, and record-designated time zones.

In the recorded-program table 30, only record-designated channels and record-designated time zones are displayed. The record-designated time zone may be one or plural time zones. In the case where the number of receivable channels extends over several tens of channels, when channels which are not record-designated are displayed in the recorded-program table, long time is required for the user to search a program to be viewed. When the whole program table before the current time is displayed, the display size becomes large after elapse of several days or more, and hence the searching operation is cumbersome. Therefore, it is very convenient for the user that only record-designated channels and record-designated time zones are displayed in the program table format.

In Fig. 3, the record-designated channels are displayed on the channel axis 31, or channel display portions 33a to 33h for eight channels are displayed. When a cursor button of the remote controller is operated, the screen is scrolled right or left, so that other channels which are not displayed on the screen 8a can be viewed. A present time display 37 is displayed in the upper end of the recorded-program table 30.

The record-designated times are displayed on the time axis 32. Time display portions 34a to 34f for six hours are displayed. The time display portion 34a displays a time zone of one hour from 10 AM of Dec. 12 to 11 AM, the time display portion 34b displays a time zone of one hour from 11 AM of Dec. 12 to 0 PM, and the time display portion 34c displays a time zone of one hour from 0 PM of Dec. 12 to 1 PM. The time display portions 34a to 34c show the continuous time zone of three hours. The time display portion 34d displays a time zone of one hour from 1 PM of Dec. 13 to 2 PM, the time display portion 34e displays a time zone of one hour from 1 PM of Dec. 14 to 2 PM, and time display portion 34f displays a time zone of one hour from 1 PM of Dec. 15 to 2 PM When the cursor button of the remote controller is operated, the screen is scrolled up or down, so that other time zones which are not displayed on the screen 8a can be viewed. The time axis 32 is displayed also in the right side of the screen.

In Fig. 3, thumbnail display portions 36a to 36h are displayed in the channel display portions 33a to 33h. A thumbnail is an image which is reduced in size in order to display many images in the list format. The image is a motion image or a still image. Immediately after the recorded-program table 30 is displayed on the screen, thumbnails of programs of channels in the uppermost time display portions 34a displayed on the screen 8a are displayed in the thumbnail display portions 36a to 36h.

In Fig. 3, in order to simplify the drawings, only the genre names of programs are described in a program display portion 35. Actually, the name of a recorded program and brief introduction of the program are described for each channel and time. The description contents are identical with those in the case of display of an EPG program table. When a program is to be recorded, also program information data based on EPG data are simultaneously recorded, and used to produce the recorded-program table 30 by the recorded-program table generation module 22.

In the embodiment, in areas showing recorded programs in the program display portion 35, an area 35a where a recommendation display is to be displayed is disposed. In the example of Fig. 3, the recommendation display is indicated by a mark of ☆. As the number of ☆ is larger, the popularity ranking is higher. In the recommendation display of Fig. 3, the popularity ranking based on the recommended program information or the past recommended program information is divided into five levels, and zero to four of ☆ are displayed in the ascending order of the popularity ranking. In the example of Fig. 3, for example, the popularity ranking of a movie program which was broadcasted in the fifth channel in which the station name is CineV, from 1 PM of Dec. 14 (Sa) to 2 PM is highest.

The controller 11 may obtain information indicative of the existence/nonexistence of information which is newly supplied from the information providing system 40. When the controller 11 detects that recommended program information or the like is updated, a banner may be displayed on the screen.

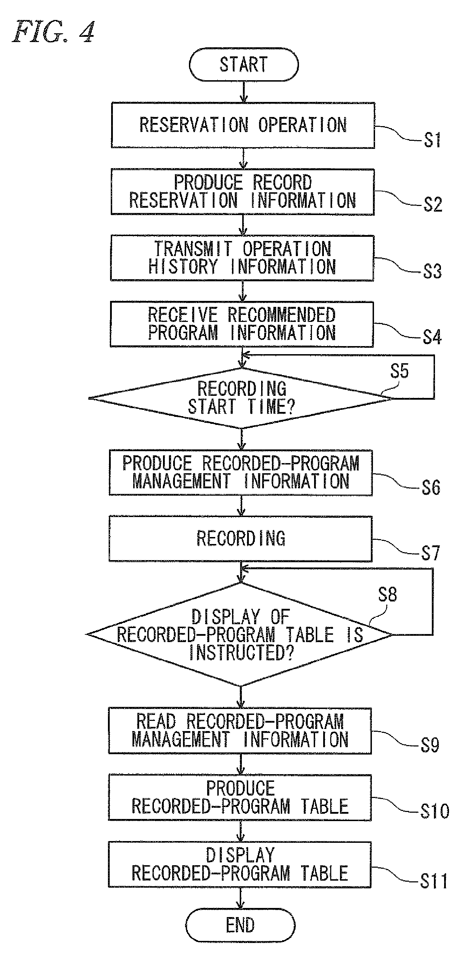

Next, the operation of the thus configured embodiment will be described with reference to the flowchart of Fig. 4.

In step S1 the user performs record reservation. The record reservation may be performed using a program table based on the EPG. The user performs operations of displaying a program table. The display controller 23 performs an image producing process of displaying a program table. Therefore, the display processor 7 produces a video signal for displaying the program table, and supplies the signal to the displaying device 8. The displaying device 8 displays the program table on the display screen.

The controller 11 receives a user's selecting operation of record reservation, through a GUI process using the program table display. Namely, by using the operation device 20, the user performs an operation of designating contents on the program table display, whereby contents to be record-reserved can be designated. After designating contents to be record-reserved, the user performs a record reserving operation of setting recording of the contents. When the record reserving operation is performed in this manner, the controller 11 produces record reservation information based on the record reserving operation (step S2), and stores the information in the flash memory 15.

In the embodiment, next, the controller 11 transmits operation history information based on the record reserving operation to the information providing system 40 (step S3). The operation history information is transmitted from the transmitting/receiving module 21 onto the Internet, and received by the transmitting/receiving module 42 of the information providing system 40.

The information generation module 43 of the information providing system 40 counts operation history information to produce recommended program information and past recommended program information. As described above, recommended program information corresponds to the number of reservations of programs which will be broadcasted after the current time, and indicates the popularity ranking. Past recommended program information is recommended program information which is produced based on the numbers of reservations and reproductions, and which is fixed by the previous day. At a predetermined time, the controller 11 transmits to the information providing system 40 a request for transmitting recommended program information, and receives recommended program information and past recommended program information (step S4). The controller 11 receives recommended program information and past recommended program information, at, for example, a fixed time each day, and stores the received recommended program information and past recommended program information in the flash memory 15 or the like. In order to simplify the description, hereinafter, past recommended program information will be described as recommended program information in the case where it is not necessary to distinguish between recommended program information and past recommended program information.

At the recording start time which is designated by the record reservation information (step S5), the controller 11 controls the device which is designated as the recording destination, to start recording of a program of the designated record channel. In the embodiment, in this case, the controller 11 extracts information related to the recorded program from the received recommended program information, produces information for a recommendation display as recorded-program management information of the recorded program, and records the information in the recorded-program information management module 24 (step S6). The controller 11 records the recorded program, and records the recorded-program management information of the recorded program in correspondence with the recorded program (step S7).

In this way, accompanying with the recorded program, information based on the recommended program information which is produced by the information providing system 40, and which is received at the timing of recording is recorded. In the above, the description has been made assuming that recommended program information is received at a fixed time each day. Alternatively, recommended program information which is latest at the timing may be received at each start of recording.

Here, it is assumed that the user operates the operation device 20 to display the recorded-program table (step S8). The controller 11 reads out recorded-program management information of programs recorded in the recorded-program information management module 24 (step S9). The recorded-program display generation module 22 produces a recorded-program table from data such as the designated channel and time in recording stored in the flash memory 15, record management data stored in the recorded-program information management module 24, and the program information recorded in the video recording device 16 or the external storage device 18 (step S10). In this case, based on the recorded-program management information read out from the recorded-program information management module 24, the recorded-program display generation module 22 displays recommendation displays corresponding to recommended program information, in correspondingly with programs. As a result, for example, the recorded-program table shown in Fig. 3 is displayed on the screen 8a of the displaying device 8 (step S11).

When the user refers the recommendation displays of the recorded-program table display, the user can easily know recommended program based on the recommended program information supplied from the information providing system 40. Since the recommendation display showing programs which are recommended to be viewed among a very large number of recorded programs is displayed, the embodiment is very convenient.

Simultaneous and continuous recordings of plural programs are automatically conducted in accordance with setting of the record time and channels which is performed by the user. Since the capacity of the recording device is finite, the controller 11 erases a recorded program in which a predetermined time period has elapsed from the recording. In the embodiment, in this case, with respect to a program which is determined as a popular program based on recommended program information, the controller 11 may display a warning message to the user indicating that a popular program is to be erased, before erasure of the recorded program. Alternatively, a popular program may not be automatically erased.

When a recommendation display is selected, desired ranking information may be obtained.

In the above embodiment, a recommendation display based on the recommended program information supplied from the information providing system can be displayed in the recorded-program table. When selecting a program to be reproduced from a very large number of recorded programs, the user can refer the recommendation display.

The recommendation display may be displayed in various manners such as that recommendation is indicated by one of plural levels which are obtained by dividing the points, the order, or the ranking, and that the display or non-display of recommendation is simply performed. In Fig. 4, the recommendation display is indicated by the mark of ☆ Alternatively, a crown mark, different colors, the order, the score, or the like may be displayed.

In the above, recommended program information and past recommended program information are used without being distinguished from each other. In the case where it is considered to use more correct information, however, it is preferable to use past recommended program information.

In the embodiment, information of programs is extracted from the received recommended program information, and recorded as recorded-program management information in correspondence with the programs. However, the received recommended program information may be recorded as a database separately from programs, and, when the recorded-program display is displayed, information of each program is extracted from the read out database to perform recommendation display.

(Second embodiment)

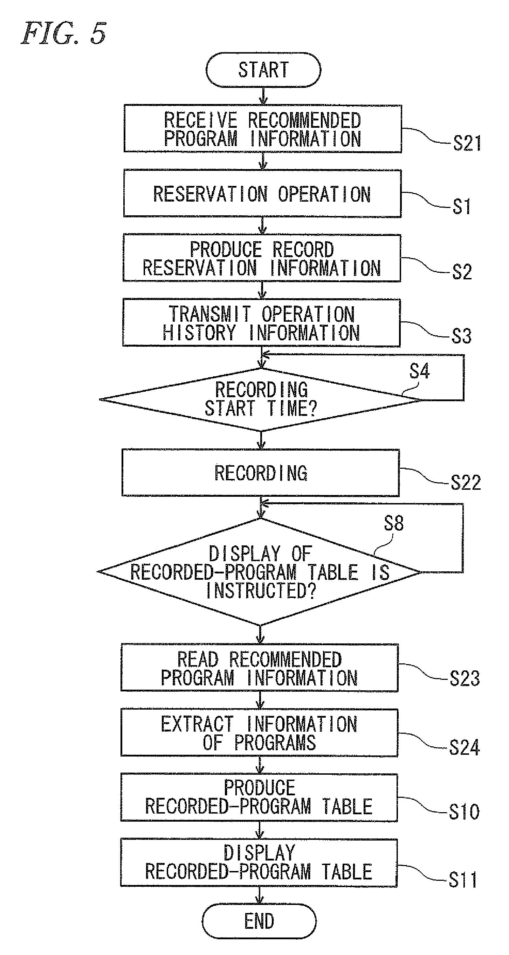

Fig. 5 is a flowchart illustrating the operation of a second embodiment. In Fig. 5, the procedures identical with those of Fig. 4 are denoted by the same reference numerals, and their description is omitted. The embodiment can be configured by hardware similar to that of Fig. 1, and is different from the first embodiment only in the control of the controller 11.

In the first embodiment, recorded-program management information is produced based on recommended program information at the timing when recording is started, the recommended program information is recorded in correspondence with a recorded program, and, when the recorded-program table is displayed, recorded-program management information is read out and recommendation display is performed. On the other hand, in the embodiment, when a program is recorded, recorded-program management information based on recommended program information is not recorded, and, when the recorded-program table is displayed, a recommendation display based on recommended program information is performed.

In the embodiment, namely, recommended program information is received in step S21. At a predetermined time such as a fixed time each day, the controller 11 transmits a request for transmitting recommended program information, to the information providing system 40, and receives recommended program information. The controller 11 stores the received recommended program information in the flash memory 15 or the like, and updates the information at each reception of recommended program information.

Here, it is assumed that the user performs a record reserving operation (step S1). The operations from the record reserving operation to the start of recording are identical with those of the first embodiment. In the embodiment, in a recording process in step S22, only a program on which record reservation is conducted is recorded, and reproduction and recording of recorded-program management information based on recommended program information are not performed.

When a display of the recorded-program table is instructed by a user's operation, the process transfers from step S8 to a process step of S23 to read out recommended program information. The controller 11 reads out recommended program information, and extracts information of programs (step S24). In production of a recorded-program table, the recorded-program display generation module 22 adds recommendation displays corresponding to recommended program information of programs, to the table (step S10).

According to the embodiment, similarly with the first embodiment, recommendation displays can be displayed in the recorded-program table.

(Third embodiment)

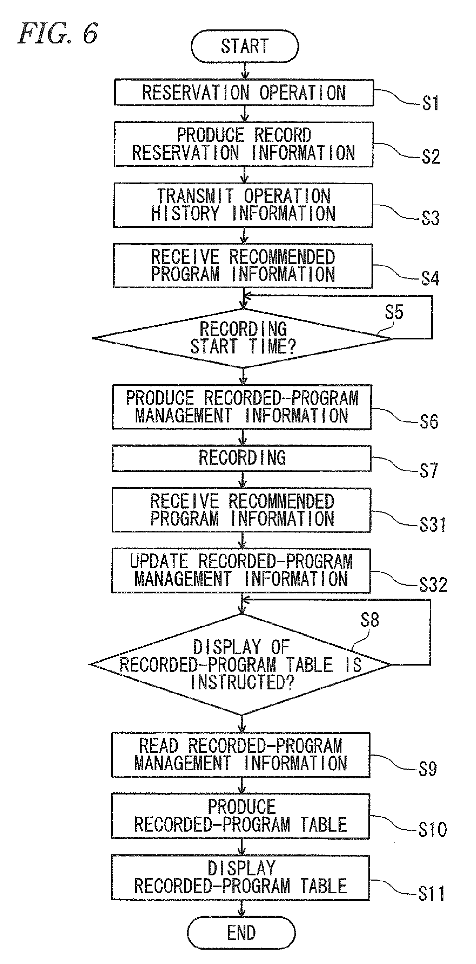

Fig. 6 is a flowchart illustrating the operation of a third embodiment. In Fig. 6, the procedures identical with those of Fig. 4 are denoted by the same reference numerals, and their description is omitted. Also the embodiment can be configured by hardware similar to that of Fig. 1, and is different from the first embodiment only in the control of the controller 11.

Recommended program information based on a record reserving operation performed by the user is based on operation history information obtained before the time when the reserve recording is started. After the reserve recording start time, i.e., during the display of the recorded-program table, the ranking which is the contents of the information is fixed. However, it is contemplated that, during the display of the recorded-program table, a recorded program has been already reproduced. In recommended program information based on a reproducing operation, therefore, the ranking which is the contents of the information is changed after the reserve recording start time. Consequently, it is contemplated that, after recording, recorded-program management information is updated based on the updated recommended program information.

Namely, the embodiment is different from the first embodiment in that processes of steps S31 and S32 are added. In step S31, at a predetermined time such as a fixed time each day, the controller 11 transmits a request for transmitting recommended program information, to the information providing system 40, and receives recommended program information. The controller 11 extracts information for each of recorded programs from the received recommended program information, produces recorded-program management information based on the extracted information, and updates recorded-program management information which has been recorded.

In the thus configured embodiment, recorded-program management information associated with a program is updated based on latest recommended program information. Therefore, a recommendation display due to recommended program information, can be performed based on not only a reserving operation performed by the user, but also a reproducing operation. For example, the controller 11 can display a recommendation display based on the number of record reservations, and that based on the number of reproductions of recorded programs in different display manners, or in a combined manner.

According to the configuration, the convenience can be further improved.

The embodiment can be applied not only to the first embodiment, but also to the second embodiment. Namely, the processes of receiving and updating recommended program information may be added after the recording process of step S22 of Fig. 5. According to the configuration, also in the second embodiment, recommendation displays based on a reserving operation and a reproducing operation are enabled.

Also in the second and third embodiments, recommended program information and past recommended program information are used without being distinguished from each other. In the case where it is considered to use more correct information, however, it is preferable to use past recommended program information. For example, in the initial recording, recommended program information may be received and stored, and, in the next and subsequent days, past recommended program information may be received and the recommended program information may be updated by the past recommended program information.

(Fourth embodiment)

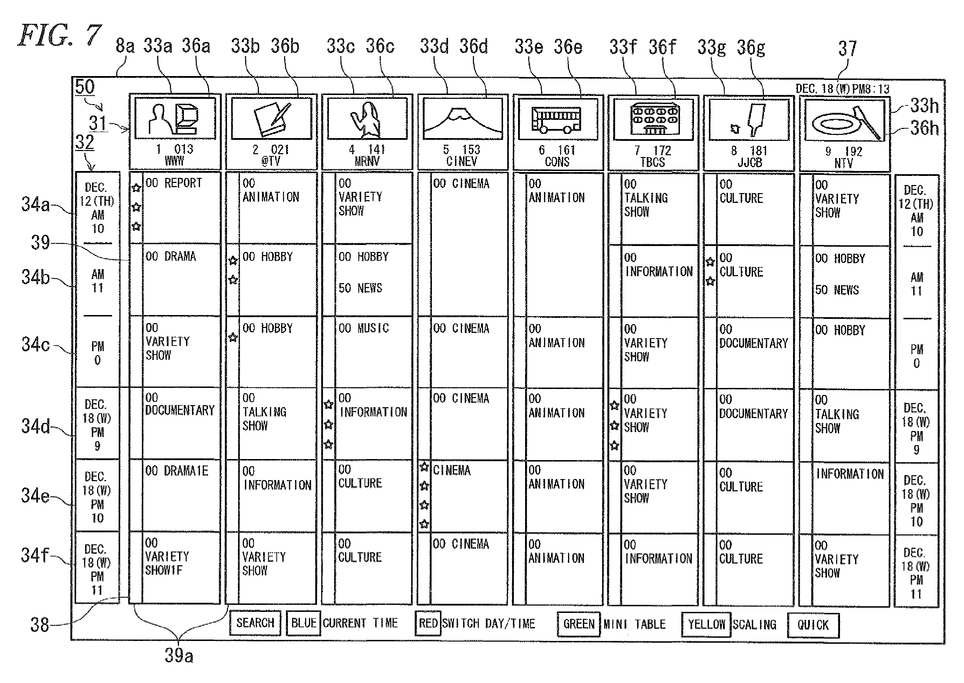

Fig. 7 illustrates a recorded-program table employed in a fourth embodiment. In Fig. 7, the portions identical with those of Fig. 3 are denoted by the same reference numerals, and their description is omitted. Also the embodiment can be configured by hardware similar to that of Fig. 1, and is different from the first embodiment only in the method of producing the recorded-program table in the recorded-program display generation module 22.

In the embodiment, the recorded-program display generation module 22 produces display data for displaying the program table shown in Fig. 2 based on EPG data, and a recorded-program table on the same screen. For example, the recorded-program display generation module 22 produces a current/past program table including a program table and a recorded-program table.

Fig. 7 illustrates the current/past program table 50. The current/past program table 50 has a recorded-program table 39 in the upper side, and a program table 38 in the lower side.

The program table 38 of Fig. 7 shows broadcast programs in a time zone after the current time or 9:13 PM of Dec. 18 (W), i.e., a time zone from 9 PM of Dec. 18 (W) to 11 PM.

On the other hand, the recorded-program table 39 shows recorded programs which were broadcasted and recorded, and which are in a time zone from 10 AM of Dec. 12 (Tu) to 0 PM.

When one of the programs in the program table 38 is designated, viewing and recording reservations can be performed. By contrast, when one of the programs in the recorded-program table 39 is designated, the program which is recorded can be subjected to reproduction or the like.

In both the program table 38 and the recorded-program table 39, display regions 39a for a recommendation display are disposed.

In the above embodiment, a recommendation display can be displayed in both the program table and the recorded-program table.

(Fifth embodiment)

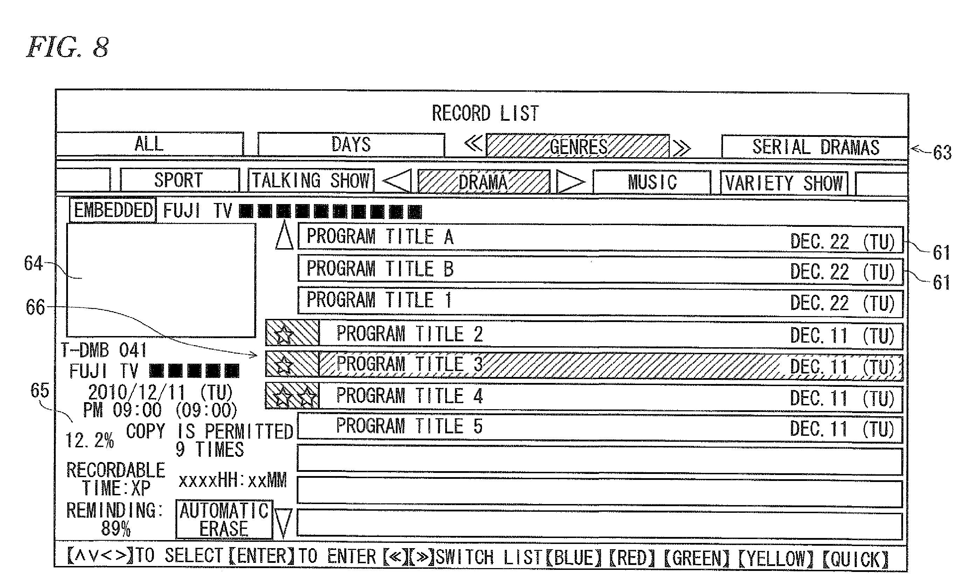

Fig. 8 illustrates a recorded-program table display employed in a fifth embodiment. The embodiment is applied to a hard disk recorder. Also the embodiment can be configured by hardware similar to that of Fig. 1 except that the displaying device 8, the speaker 9, and the like are omitted. The embodiment is different from the first embodiment only in the method of displaying the recorded-program table by the recorded-program display generation module 22.

In each of the above embodiments, a recommendation display is displayed when a recorded-program table is displayed in a television receiver capable of performing simultaneous and continuous recordings. However, a recommendation display can be displayed in all kinds of devices which perform a recorded-program display.

Fig. 8 shows an example in which the embodiment is applied to a recorded-program display in a digital broadcast recording/reproducing apparatus such as a hard disk recorder. In the digital broadcast recording/reproducing apparatus, a recorded-program display is displayed in a list display format. In such a recorded-program table display, recorded-program tables are displayed by strip-like display regions 61.

In the example of Fig. 8, a title "Record list" indicative of a recorded-program table display is displayed in an upper portion of the screen, tags 63 for classifying the record list is displayed below the title. In the example of Fig. 8, the record list is classified into "all", "days", "genres", and "serial drama".

In Fig. 8, the hatched portion shows that "genre display" is selected. In the example of Fig. 8, the genre is classified into "sport", "talking show", "drama", "music", and "variety show". In Fig. 8, the hatched portion shows that "drama" is selected, and programs which are recorded as "drama" are displayed in the regions 61.

In the example of Fig. 8, the program titles of recorded programs and the record dates are displayed in the regions 61. On the left side of the regions 61, a region 64 where a reduced image of the program which is selected by the hatched region 61, and a region 65 where detailed information is displayed are disposed. In the region 65 where detailed information is displayed, information such as the broadcast station, the record date, and the copying permission/inhabitation is displayed. Moreover, information of the recordable time and the recording residual amount is displayed in the left lower portion of the record list display.

In the embodiment, for a program on which a recommendation display is to be displayed, a recommendation display region 66 is disposed in the left end of the strip-like region. In the example of Fig. 8, the recommendation display region 66 is disposed for programs titled "Program title 2", "Program title 3", and "Program title 4". The recommendation display shown in Fig. 8 indicates the popularity ranking by means of the mark of ☆. As the number of marks is larger, the popularity ranking is higher. Similarly with the first embodiment, various methods may be employed to display the recommendation display.

In the above embodiment, the recommendation display can be displayed also on the recorded-program table display.

(Sixth embodiment)

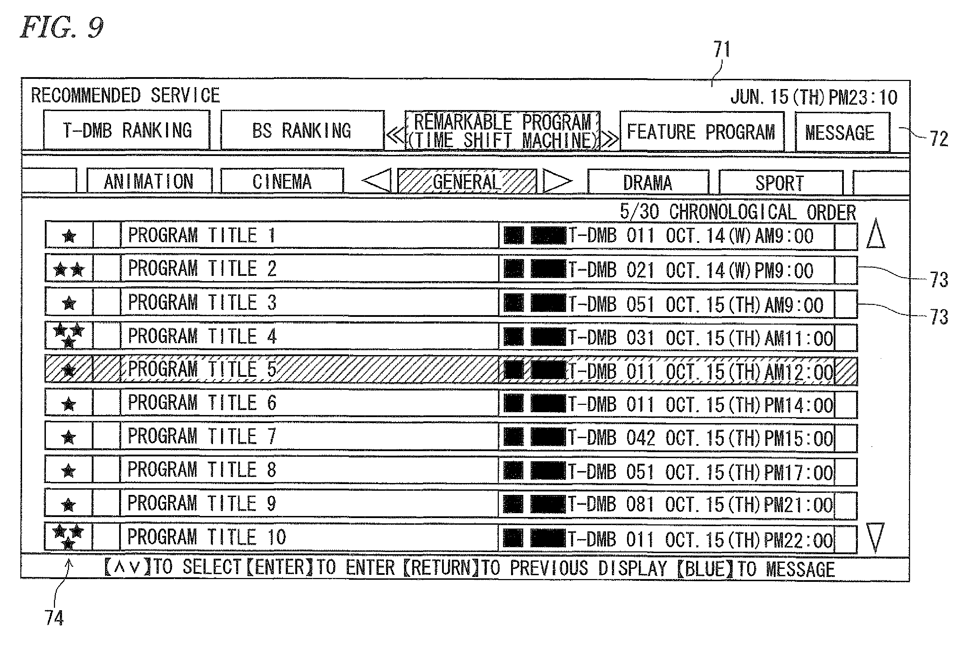

Fig. 9 illustrates a recorded-program table display employed in a sixth embodiment. The embodiment shows an example of a recorded-program table display in a television receiver having a function of simultaneous and continuous recording. Also the embodiment can be configured by hardware similar to that of Fig. 1. The embodiment is different from the first embodiment only in the method of displaying a recorded-program display by the recorded-program display generation module 22.

The example of Fig. 9 shows recommended service tags 71 of "T-DMB ranking", "BS ranking", "remarkable program in time shift machine", "feature program", and "message". In Fig. 9, the hatched portion shows that "remarkable program in time shift" is selected. In "remarkable program in time shift", only programs on which a recommendation display based on recommended program information is to be displayed, and which are selected from all recorded programs are displayed as a list.

In the example of Fig. 9, "remarkable program in time shift" is classified into genres. In Fig. 9, the hatched genre "general" is selected from genres "animation", "cinema", "general", "drama", and "sport", and recorded programs contained in the genre "general" are shown.

Also in the example of Fig. 9, programs are indicated by strip-like regions 73, and the program title, the broadcast station, and the record date are shown in each of the regions 73. A recommendation display region 74 is disposed in the left end of each of the regions 73. The recommendation display shown in Fig. 9 indicates the popularity ranking by means of the mark of ☆. As the number of marks is larger, the popularity ranking is higher. Similarly with the first embodiment, various methods may be employed to display the recommendation display.

In the above embodiment, the recommendation display can be displayed also on the recorded-program table display.

In each of the above-described embodiments, a recommendation display is performed on a display of the recorded-program display. However, in reproduction of a recorded program, a display informing of a recommendation display may be displayed superimposedly on a reproduced motion picture.

The invention is not restricted to the above-described embodiments, and can be embodied while variously modifying the above embodiments without departing the spirit of the invention. Plural disclosed components may be appropriately combined. For example, even if some of the components are omitted, the advantages of the embodiments will be still attained.

## Claims

1. A digital broadcast recording/reproducing apparatus comprising:
a receiving module configured to receive a digital broadcast;
a recording/reproduction module configured to record/reproduce a program received by the receiving module;
an information recording/management module configured to record/manage program meta information received by the receiving module, the program meta information corresponding to the program to be recorded by the recording/reproduction module;
an information receiving module configured to access an information providing system that provides recommended program information, to receive the recommended program information therefrom; and
a recorded-program table generation module configured to display simultaneously a recommendation display based on the recommended program information, in at least one of a case where the program meta information recorded in the information recording/management module is displayed and a case where the program recorded in the recording/reproduction module is reproduced.

2. The apparatus of Claim 1,
wherein, when a program is recorded by the recording/reproduction module, the information recording/management module records recommended program information corresponding to the program to be recorded.

3. The apparatus of Claim 1 or 2,
wherein, at least one of at a predetermined time and upon receiving an operation of displaying recommended program information, the information receiving module receives the recommended program information produced by the information providing system.

4. The apparatus of any one of Claims 1 to 3, further comprising:
an information transmitting module configured to access the information providing system, and to transmit at least one operation of record reservation, execution of recording, and reproduction of a recorded program in the recording/reproduction module, as operation history information to the information providing system.

5. The apparatus of any one of Claims 1 to 4,
wherein the recorded-program table generation module displays a recorded-program display in a program table format.

6. The apparatus of any one of Claims 1 to 4,
wherein the recorded-program table generation module displays a recorded-program display in a list format.

7. The apparatus of any one of Claims 1 to 6,
wherein the recorded-program table generation module simultaneously displays a recorded-program display and a program table which displays programs after the current time.
